# EUROPEAN PATENT SPECIFICATION

(11) **EP 3 452 235 B1**
(45) Date of publication and mention of the grant of the patent: **22.04.2020**
(21) Application number: 17793009.6
(22) Date of filing: 24.04.2017
(51) Int. Cl.: F28G 15/02, F28G 1/16, F28G 15/04

(54) **ENDLESS BELT FLEXIBLE TUBE CLEANING LANCE DRIVE APPARATUS**
ANTRIEBSVORRICHTUNG FÜR SCHLAUCHREINIGUNGSLANZE EINES ENDLOSBANDS
APPAREIL D'ENTRAÎNEMENT À COURROIE SANS FIN POUR LANCE DE NETTOYAGE DE TUBE FLEXIBLE

(30) Priority: 05.05.2016 US 201662332309 P
(43) Date of publication of application: 13.03.2019
(73) Proprietor: Stoneage, Inc., Durango, Colorado 81303 (US)
(72) Inventor: BARNES, Jeffery R., Ignacio, Colorado 81137 (US)
(74) Representative: Simmons & Simmons
(86) International application number: PCT/US2017/029128
(87) International publication number: WO 2017/192289

(56) References cited:
- EP-A1- 1 316 381
- US-A- 3 938 535
- US-A- 4 000 636
- US-A- 5 109 598
- US-A1- 2010 300 498
- US-A1- 2010 300 498
- US-A1- 2015 034 128
- US-A1- 2016 052 029
- US-A1- 2016 052 029

## Description

### BACKGROUND OF THE DISCLOSURE

The present disclosure is directed to high pressure fluid cleaning lance handling systems. In particular, embodiments of the present disclosure are directed to an apparatus for advancing and retracting one or more flexible tube cleaning lances from tubes arranged in an array, such as in a heat exchanger, from a position adjacent a heat exchanger tube sheet.

Document US 2010/0300498 A1 discloses a flexible high pressure fluid cleaning lance drive apparatus comprising:a housing; at least one drive motor disposed in a first portion of the housing, the drive motor having a drive axle projecting across a second portion of the housing carrying a cylindrical spline drive roller; an endless belt wrapped around the at least one spline drive roller, the belt having a transverse splined inner surface having splines shaped complementary to splines on the spline drive roller.

A flexible lance drive apparatus typically includes a drive motor coupled via gearing, a chain, or a belt to one or more drive mechanisms. Drive mechanisms can be rollers that are arranged in pairs or sets sandwiching a flexible lance hose therebetween or chain and block assemblies oriented with interlocking top and bottom assemblies. At least one roller of the sets of rollers, or chain and block assemblies may be driven. In order to accommodate different diameter lance hoses, the rollers or chain and block assemblies must be laboriously disassembled and replaced, and it may be necessary to modify the drive motor as well to accommodate the characteristics of a different driven lance hose. Additionally, once a mechanism has been properly configured for a given lance hose size, the distance between opposing drive mechanism roller pairs as the force that a given pair exerts on a lance hose is typically adjusted via a manual mechanical adjustment.

U.S. Patent No. 9,070,830, for example, teaches a drive apparatus which requires the lance itself to be bent around a portion of the drive wheel in order to ensure sufficient drive force is transferred to the lance itself, especially in real world environmental application scenarios which are often less than ideal. Furthermore, such drive apparatuses are large, bulky, and thus must be either separately located on a floor near the heat exchanger tube sheet into which the lance or lances are supposed to be guided, as is shown in that publication, or rigidly mounted to a tray spaced from and aligned with the tube sheet. In such cases the tube bundle is typically physically removed from the heat exchanger and placed in an environment with sufficient space to accommodate the tray and drive assembly.

A lance drive mechanism incorporating a pair of opposing endless belts is disclosed in US Patent Application Publication 2010/0300498. This apparatus includes two opposing, segmented, endless belts above and below a flexible lance. Each of the belts has a V shaped groove in which the lance being driven resides. A pair of opposing platform clamps are used to push the endless belts against the lance(s) in the V shaped grooves of the belt. This generates a substantial drag on the endless belt that must be overcome by the power of the drive motor or motors.

What is therefore needed is a compact package drive solution that takes up a minimal space, can be mounted directly to an x-y lance positioner, facilitates simplified handling of multiple lances and several different sized flexible lance hoses interchangeably, can operate consistently under a variety of operating conditions, can be optimized for performance remotely, and remains simple to repair, service and modify for a variety of applications.

### SUMMARY OF THE DISCLOSURE

A flexible lance drive apparatus in accordance with the present disclosure directly addresses such needs. A flexible lance drive apparatus according to the invention is defined in claim 1. This includes a housing, at least one pneumatic drive motor disposed in a first portion of the housing having a drive axle projecting across a second portion of the housing carrying a cylindrical spline drive roller, a plurality of cylindrical guide rollers on fixed axles spanning across the second portion of the housing aligned parallel to the spline drive roller, a side surface of each guide roller and the at least one spline drive roller being tangent to a common plane between the rollers, and an endless belt wrapped around the at least one spline drive roller and guide rollers. The belt has a generally smooth outer surface and a transverse splined inner surface having splines shaped complementary to splines on the spline drive roller. A bias member supports a plurality of follower rollers each aligned vertically above one of the at least one spline drive roller and guide rollers. The bias member is operable to press each follower roller toward one of the spline drive rollers and guide rollers to frictionally grip a flexible lance hose when sandwiched between the follower rollers and the endless belt.

An exemplary embodiment of a flexible lance drive apparatus in accordance with the present disclosure includes a generally rectangular housing and a first and a second drive motor disposed side by side and spaced apart in a first portion of the housing. Each drive motor has a drive axle projecting into a second portion of the housing carrying a cylindrical spline drive roller. A plurality of cylindrical guide rollers on fixed axles span across the second portion of the housing between the spline drive rollers and are aligned parallel to the spline rollers. An endless belt having an inner spline side and an outer side is wrapped over the drive rollers and guide rollers. The side surface of each guide roller is tangent to an axis tangent to and extending between the spline rollers. A bias member supporting a plurality of follower rollers is aligned vertically above the spline drive rollers and guide rollers. This bias member is operable to presses each follower roller against a flexible lance hose sandwiched between the follower rollers and the endless belt on the spline rollers as the endless belt is rotated to frictionally propel the lance hose forward and backward through the apparatus.

### DESCRIPTION OF THE DRAWINGS

FIG. **1** is a belt side view of the drive apparatus in accordance with the present disclosure.
FIG. **2** is a drive motor side view of the drive apparatus in accordance with the present disclosure.
FIG. **3** is a belt side perspective view of the drive apparatus in accordance with the present disclosure with its side cover removed.
FIG. **4** is a belt side perspective view as in FIG. **3** with the upper and lower vertical support plates removed.
FIG. **5** is a drive motor side perspective view of the drive apparatus shown in FIGS. **1** and **2** with the housing top plate, bottom plate, and end plates removed and the first vertical support plate shown transparent.
FIG. **6** is a vertical sectional view taken along the line **6-6** through the apparatus shown in FIG. **1****.**
FIG. **7** is a vertical sectional view taken along the line **7-7** through the apparatus shown in FIG. **1****.**

### DETAILED DESCRIPTION

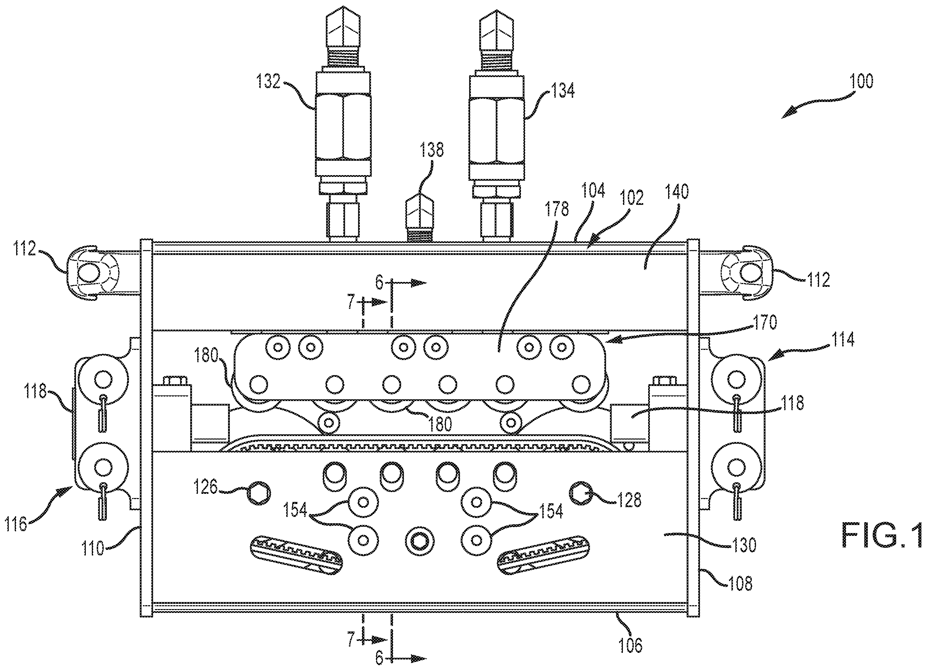

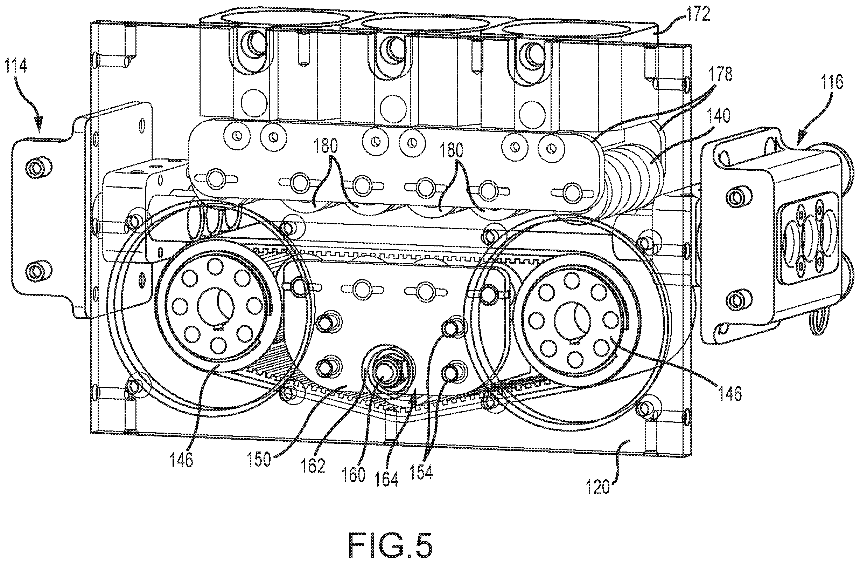

An exemplary high pressure cleaning lance hose drive apparatus according to the present disclosure is shown in FIGS. **1-7****.** Referring now to FIG. **1****,** a belt side view of the apparatus **100** is shown with its side cover removed. The apparatus **100** has a rectangular box housing **102** that includes a flat top plate **104,** a bottom plate **106,** front and rear walls **108** and **110,** and two C shaped carry handles **112,** one on each of the front and rear walls **108** and **110.** In FIGS. **1-7****,** sheet side covers (not shown) are removed so that internal components of the apparatus **100** are visible.

Fastened to the front wall **108** is an exit hose guide manifold **114.** Fastened to the rear wall **110** below the carry handle **112** is a hose entrance guide manifold **116.** Each of these manifolds **114** and **116** includes a set of hose guide collets **118** for guiding one to three flexible lance hoses (not shown) into and out of the housing **102.** Each guide collet set **118** is sized to accommodate a particular lance hose diameter. Hence the collet sets are changeable depending on the lance size to be driven by the apparatus **100.**

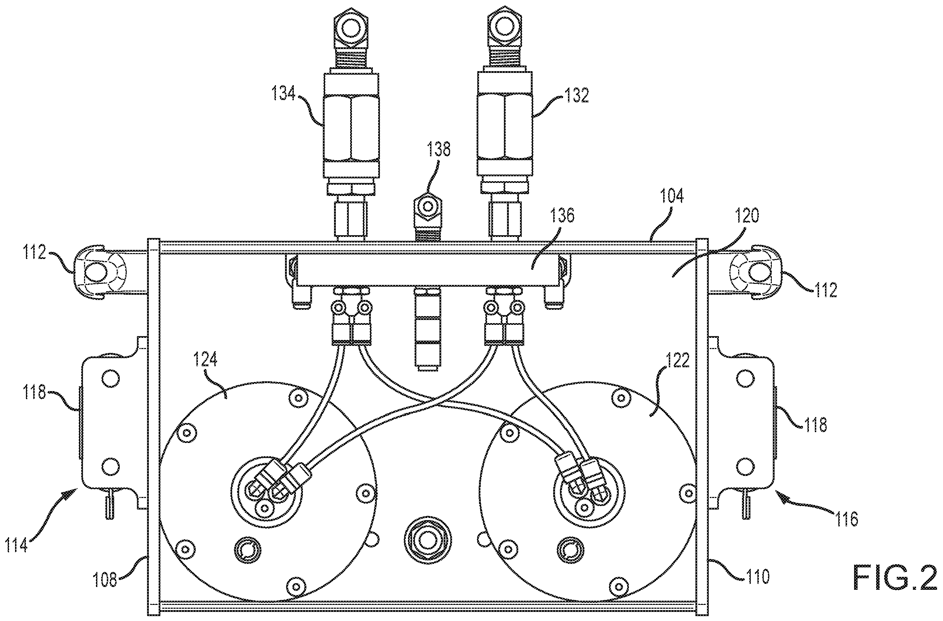

A motor side view of the apparatus **100** is shown in FIG. **2****.** The housing **102** includes an inner vertical support partition wall **120** fastened to the front and rear walls **108** and **110** and the top and bottom plates **104** and **106.** This vertical support partition wall **120** divides the housing into a first portion and a second portion. The first portion houses hose fittings and drive motors. The second portion is a belt cavity **121** through which flexible lance hoses are driven, and is shown at least in FIGS. **1****,** **3** and **4****.**

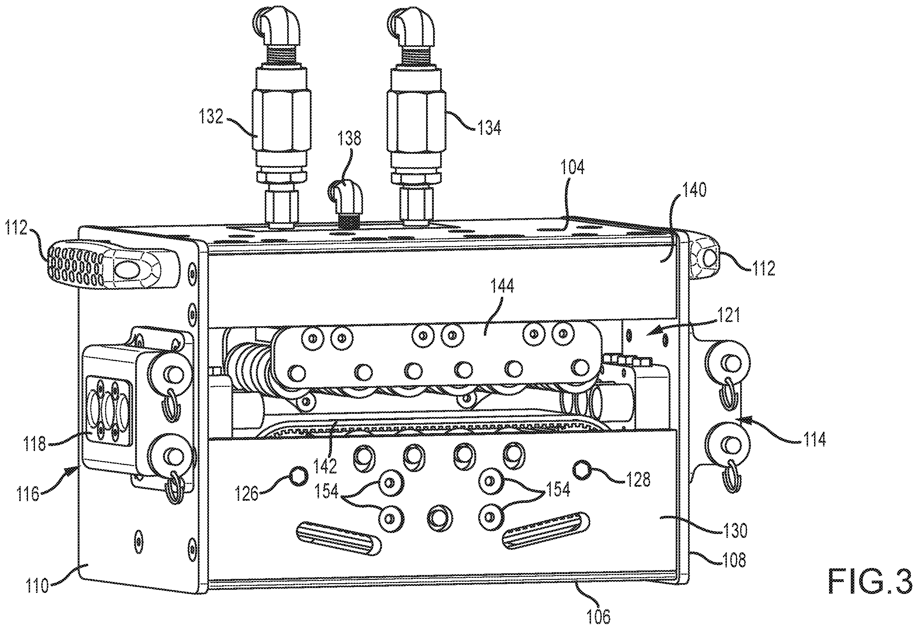

In this exemplary embodiment **100,** the inner vertical support wall **120** carries a pair of pneumatic drive motors **122** and **124** mounted such that their drive shafts **126** and **128** protrude laterally through the support wall **120** into the second portion, or belt cavity, between the inner vertical wall **120** and an outer vertical lower support wall **130,** shown in FIGS. **1** and **3****.** Each of the drive motors **122** and **124** is connected to pneumatic forward feed line **132** and reverse feed line **134** through a feed manifold **136** fastened to the top plate **104.** A clamp pressure feed line fitting **138** also passes through this feed manifold **136** to a hose clamp assembly **144** described below. Each of the drive motors **122** and **124** is preferably a compact radial piston pneumatic motor. However, hydraulic or electric motors could alternatively be used.

On the belt side view shown in FIGS. **1** and **3****,** the belt cavity **121** is defined between the inner vertical wall **120** and the outer lower support wall **130.** A separate upper outer support wall **140** aligned with the lower outer support wall **130** provides a rigid joint between the front and rear walls **108** and **110** while providing a visible space between the entrance and exit guide manifolds **116** and **114.** This spacing helps an operator thread up to three lances laterally into and through the belt cavity **121** between an endless drive belt **142** and a vertically arranged hose clamp assembly **144.** Each of the support walls **120, 130** and **140** is preferable a flat plate of a lightweight material such as aluminum or could be made of a structural polymer with sufficient strength and rigidity to handle the motor operational stresses involved.

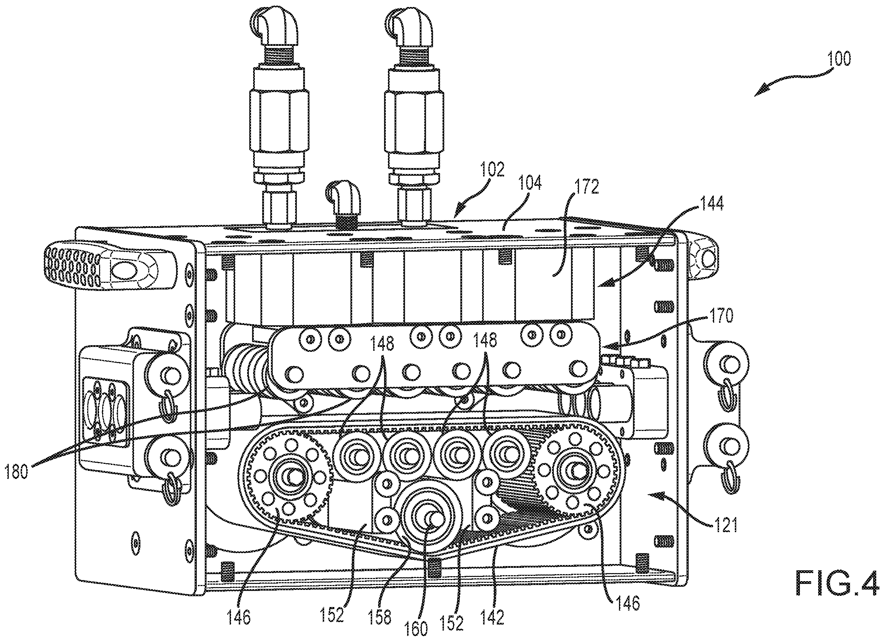

A perspective view of the apparatus **100** with the upper and lower outer vertical support walls **140** and **130** removed is shown in FIG. **4****.** Each of the motor drive shafts **126** and **128** has an axial keyway fitted with a complementary key (not shown) that engages a corresponding keyway in a cylindrical splined drive roller **146.** Thus each drive roller **146** is slipped onto and keyed to the drive shaft so as to rotate with the drive shaft **126** or **128.** Each splined drive roller **146** has its outer cylindrical surface covered with equally spaced splines extending parallel to a central axis of the roller **146.** The distal ends of each of the drive shafts **126** and **128** extends through the lower outer support wall **130** and are primarily laterally supported from plate **120.** Additional lateral support for the distal ends of each of the drive shafts **126** and **128** is provided by the lower outer support wall **130** via cone point set screws engaging a V groove (not shown) in each of the shafts **126** and **128.**

Each of the drive shafts **126** and **128** may extend fully through the splined drive rollers **146** or the drive motors **122** and **124** may each be fitted with a stub drive shaft which fits into a bearing within the proximal end of each of the splined drive rollers **146.** A separate bearing supported drive shaft **126** or **128** extends out of the distal end of each drive roller **146** and is fastened to the support wall **130** via cone point set screws. In such an alternative, the drive rollers **146** become part of the drive shafts **126** and **128.**

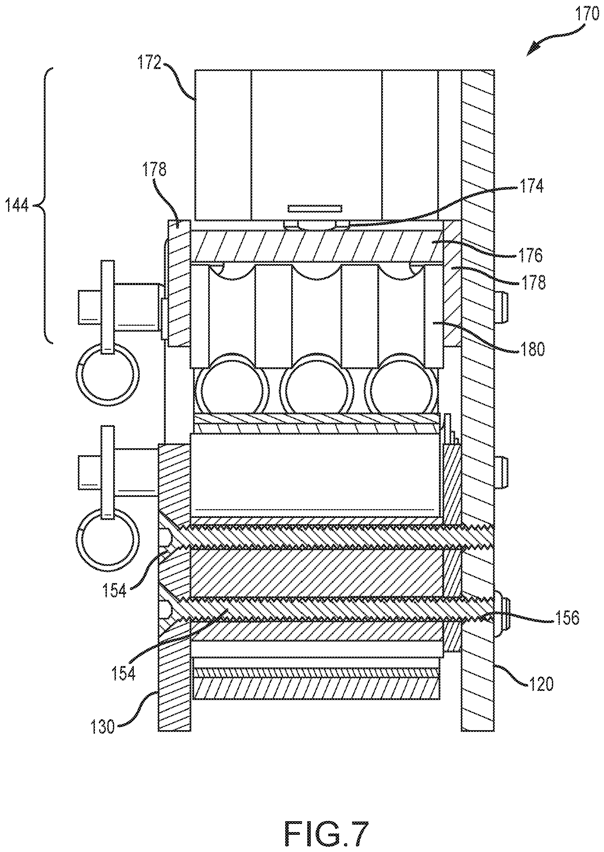

Spaced between the two splined drive rollers **146** is a set of four cylindrical guide rollers **148** that are supported by the lower outer support wall **130** via a vertical plate **150** and a pair of rectangular vertical spacer blocks **152** that are through bolted to both the lower outer support wall **130** and inner vertical wall **120** through the vertical plate **150** via bolts **154.** This preferred bolting arrangement is shown in the sectional view of FIG. **7****.** While the bolts **154** pass through the vertical plate **150,** their distal ends extend further through, and are threaded into holes **156** through the inner vertical wall **120.**

Tension on the endless belt **142** is preferably provided by a tensioner roller **158** between the spacer blocks **152** that is supported from the inner vertical plate **150** on an eccentric shaft **160,** and accessed through an opening **162** in the inner vertical wall **120,** shown in FIG. **2****.** Rotation of this eccentric shaft **160** essentially moves the tensioner roller **158** through a slight arc downward or upward to provide more or less tension on the belt **142.**

To replace the belt **142,** the four bolts **154** are loosened and screws holding the outer lower wall **130** to the front and rear walls **108** and **110** are removed. The cone point set screws engaging a V groove (not shown) in each of the shafts **126** and **128** are then removed. The assembled structure including the vertical plate **150,** spacer blocks **152,** belt **142,** drive rollers **146,** and guide rollers **148** can then be removed as a unit by sliding the drive rollers **146** off of the keyed shafts **126** and **128.**

In an alternative configuration if the bolts **154** are instead threaded into the plate **150** rather than the wall **120,** and simply guided through holes **156** in wall **120,** the outer lower wall **130,** inner vertical plate **150,** tensioner roller **158** on eccentric shaft **160** and spacer blocks **152** can form a unitary assembly **164** carrying the guide rollers **148** that can be separately removed laterally from the belt cavity as a unit by unfastening the outer lower wall **130** from the front and rear walls **108** and **110** and removing set screws from the drive rollers **146.** When this unitary assembly **164** is removed, only the belt **142** and drive rollers **146** on shafts **126** and **128** remain in the belt cavity. The endless belt **142** may then be slipped easily off of the drive rollers **146** and a new belt **142** installed.

The assembly **164** including outer lower wall **130,** inner vertical plate **150,** tensioner roller **158** and spacer blocks **152** is then reinstalled between the end walls **108** and **110.** The distal ends of the bolts **154** guide reassembly by registering with holes **156** in the inner vertical wall **120.** The tensioner roller **158** may then be readjusted to provide proper belt tension through the opening **162** through the inner vertical wall **120.**

Each of the splined drive rollers **146** preferably has equally spaced alternating spline ridges and grooves around its outer surface which are rounded at transition corners so as to facilitate engagement of the complementary shaped lateral spline ridges and grooves in the inner side or surface of the endless belt **142.** Elimination of sharp transitions at both ridge corners and groove corners lengthens belt life while ensuring proper grip between the rollers and the belt. The outer surface portion or cover of the endless belt **142** is preferably flat and smooth to prevent undesirable hose abrasion and degradation and is preferably formed of a suitable friction material such as polyurethane. The inner side portion of the belt **142** is preferably a harder durometer polyurethane material bonded to the outer side cover. For applications with significant hydrocarbons or high lubricity products, grooves machined across the cover at 90° to the direction of belt travel may be utilized for improved traction performance against the flexible lance hose.

Spaced above the belt **142** in the belt cavity is a lance hose clamp assembly **144** including an idler roller assembly **170.** This exemplary clamp assembly **144** includes a multi-cylinder frame **172** fastened to the top plate **104** of the housing **102.** The multi-cylinder frame **172** carries two or three single acting pneumatic cylinders with pistons **174** that are each connected to a carrier block **176** and connected together via a pair of parallel spaced idler carrier frame rails **178.** A set of six idler rollers **180** is carried by the frame rails **178,** each vertically positioned directly above either one of the drive rollers **142** or one of the guide rollers **148.** Each piston **174** may be spring biased such that without pneumatic pressure, the pistons **174** are all withdrawn or retracted fully into the multi-cylinder frame **172** so as to provide access space between the idler rollers **180** and the drive belt **142** for insertion and removal of flexible lance hoses.

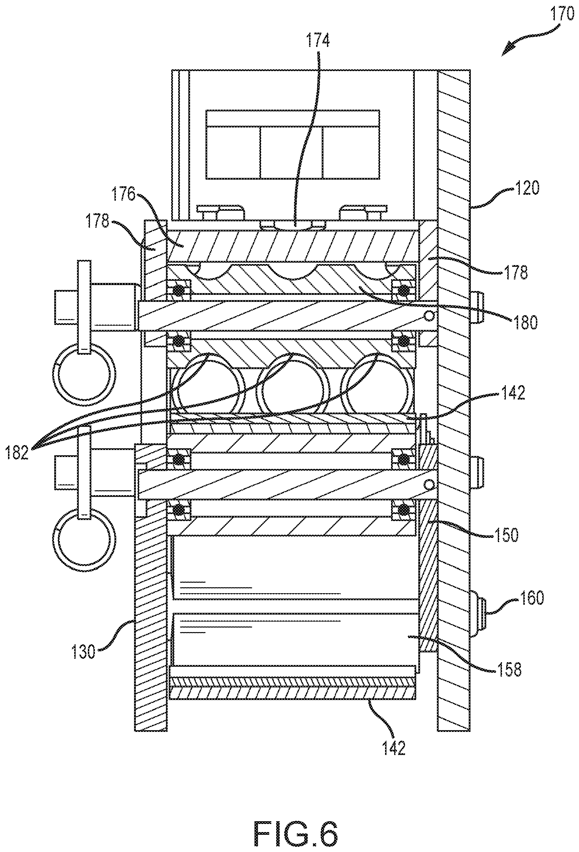

The idler rollers **180** are best shown in the sectional views through the apparatus **100** shown in FIGS. **6** and **7****.** Each idler roller **180** is a bearing supported cylindrical body, preferably of aluminum, having three spaced annular grooves **182** each preferably sized complementary to the anticipated lance hose size. These annular grooves may be V shaped, semicircular, partial trapezoidal, rectangular, or smooth U shaped so as to provide a guide through the apparatus **100** and keep the flexible lance in desired contact with the endless belt **142** during transit. Preferably the idler rollers **180** are made of aluminum or other lightweight material capable of withstanding bending loads and each groove has a concave arcuate, preferably semicircular cross sectional shape. Each groove may alternatively be a rectangular slot with corners having a radius profile to allow the hoses to have limited lateral movement as they are fed through the apparatus **100.**

In use, the drive apparatus **100** may be utilized with one, two, or three flexible lances simultaneously. In the case of driving one lance, such a lance would be preferably fed through the center collet and beneath the center groove of the idler rollers **180.** When two lances are to be driven, the inner and outer collets **118** would be used. If three lances are to be driven, one would be fed through each collet and corresponding groove of each idler roller **180.**

In alternative embodiments, more than three lance drive paths may be provided such as 2, 4 or five. Electrical or hydraulic actuators and motors may be used in place of the pneumatic motors shown and described. Although a toothed or spline endless belt is preferred as described and shown above, alternatively a smooth belt or grooved belt with wider spline spacing could be substituted along with appropriately configured drive rollers. The guide rollers **148** are shown as being smooth cylindrical rollers. They may alternatively be splined rollers similar to the drive rollers **146.**

The control system for pneumatic air supplied to the drive motors **122** and **124** may also include an autostroke function that senses reductions in air flow to each of the drive motors during forward operation, which are indicative of increased resistance to lance movement, and automatically stops, reverses and reapplies forward direction air pressure to the motors to repetitively stop, withdraw and re-advance the flexible lances in the event obstacles or restrictions are encountered and sensed within tubes being cleaned.

Many variations may be made to the apparatus **100.** For example, the lower support wall **130** may alternatively be reduced in overall size such that the belt **142** may be easily removed over the support wall **130.** In this case, the entire belt drive assembly will be cantilever supported entirely from the inner support wall **120** via spacer blocks **150** and the motor shafts **126** and **128.** In such an alternative configuration, one or more support blocks (not shown) may be provided on the belt side access door (not shown) to provide added vertical support to the reduced size alternative support wall **130** when the access door is closed as during drive operation. In another variation, where additional traction is desired, a longer space between the drive rollers **146** and an increased number of guide and idler rollers may be provided. In the embodiment **100** shown there are four idler/guide roller sets. For greater traction applications, 5, 6 or 7 idler/guide roller sets may be utilized in such an embodiment along with longer drive belts.

The single piece top idler rollers **180** may be replaced with a series of three separate grooved idler rollers bearing supported on each of the idler axle shafts to reduce friction and allow relative motion between flex lances which can simplify synchronization of the set of 2 or 3 lances at the fully extended position and at the fully retracted position of the lances. Finally, polymer or composite materials may be substituted in place of metal components in the embodiments shown, as these embodiments are merely exemplary. Therefore, all such changes, alternatives and equivalents in accordance with the features and benefits described herein, are within the scope of the present disclosure. Such changes and alternatives may be introduced without departing from the spirit and broad scope of this disclosure as defined by the claims below.

## Claims

1. A flexible high pressure fluid cleaning lance drive apparatus (100) comprising:
a housing (102);
at least one drive motor (122) disposed in a first portion of the housing (102), the drive motor (122) having a drive axle (126) projecting across a second portion of the housing carrying a cylindrical spline drive roller (146);
a plurality of cylindrical guide rollers (148) on fixed axles spanning across the second portion of the housing (102) aligned parallel to the spline drive roller (146), and wherein a side surface of each guide roller (148) and the at least one spline drive roller (146) is tangent to a common plane between the rollers;
an endless belt (142) wrapped around the at least one spline drive roller (146) and the guide rollers (148), the belt (142) having a transverse splined inner surface having splines shaped complementary to splines on the spline drive roller (146); and
a bias member (144) supporting a plurality of follower rollers (180) each aligned vertically above one of either the at least one spline drive roller (146) or one of the guide rollers (148), wherein the bias member (144) is operable to press each follower roller (180) toward one of either the at least one spline drive roller (146) or one of the guide rollers (148) to frictionally grip a flexible lance hose when sandwiched between the follower rollers (180) and the endless belt (142).

2. The apparatus (100) according to claim 1 wherein the bias member (144) includes a plurality of pneumatic cylinders (172) fastened in the housing (102) each having a piston (174) connected to a follower roller support block (176) supporting the plurality of follower rollers (180) above the endless belt (142).

3. The apparatus according to claim 1 wherein the bias member (144) has a fixed portion and a movable portion, the movable portion supporting the plurality of follower rollers (180) each vertically above one of the guide or spline rollers (148, 146).

4. The apparatus (100) according to claim 3 wherein each follower roller (180) has one end rotatably fastened to a first flat plate (178) and a second end rotatably fastened to a second flat plate and wherein the first and second flat plates (178) are fixed to a follower roller support block (176).

5. The apparatus according to claim 4 wherein the movable portion of the bias member (144) includes at least one piston (174) in a pneumatic cylinder (172) fixed to the housing (102).

6. The apparatus according to claim 5 wherein the first and second flat plates (178) are parallel and spaced above the endless belt (142).

7. The apparatus according to claim 1 further comprising a cylindrical tension roller (158) mounted in the second portion of the housing (102) for maintaining a tension on the endless belt (142).

8. The apparatus according to claim 7 wherein the tension roller (158) is mounted on an eccentric axle (160).

9. The apparatus according to claim 1 wherein the housing (102) has a vertical inner wall extending between front and rear walls and between top and bottom walls defining the first and second portions and an outer lower vertical wall (130) extending between the front and rear walls (108, 110).

10. The apparatus according to claim 9 wherein the at least one drive motor (122) is mounted to the vertical inner wall (120) and the guide rollers (148) are fastened to the outer lower vertical wall (120).

11. A flexible lance drive apparatus (100) according to claim 1 further comprising a second drive motor (124) disposed side by side with the at least one drive motor (122) and spaced apart in the first portion of the housing (102) and carrying another cylindrical spline drive roller (146) in the second portion of the housing (102).

12. The apparatus (100) according to claim 11 wherein the bias member (144) includes a plurality of pneumatic cylinders (172) fastened in the housing (102) each having a piston (174) connected to a follower roller support block (176) supporting the plurality of follower rollers (180) above the endless belt (142).

13. The apparatus (100) according to claim 11 wherein the bias member (144) has a fixed portion (172) and a movable portion (174), the movable portion supporting the plurality of follower rollers (180) each vertically above one of the guide or spline rollers (148, 146).

14. The apparatus (100) according to claim 13 wherein each follower roller (180) has one end rotatably fastened to a first flat plate (178) and a second end rotatably fastened to a second flat plate (178) and wherein the first and second flat plates (178) are fixed to a follower roller support block (176).

15. The apparatus (100) according to claim 11 wherein each follower roller (180) has spaced concave curved grooves (182).

## Patentansprüche

1. Antriebsgerät (100) für biegsame Hochdruck-Flüssigkeitsreinigungslanze, das Folgendes umfasst:
ein Gehäuse (102);
mindestens einen Antriebsmotor (122), der in einem ersten Abschnitt des Gehäuses (102) angeordnet ist, wobei der Antriebsmotor (122) eine Antriebsachse (126) aufweist, die über einen zweiten Abschnitt des Gehäuses, der eine zylindrische Keilnutantriebswalze (146) trägt, vorragt;
eine Vielzahl zylindrischer Führungswalzen (148) auf stationären Achsen, die den zweiten Abschnitt des Gehäuses (102) parallel gefluchtet zu der Keilnutantriebswalze (146) überspannen, und wobei eine Seitenoberfläche jeder Führungswalze (148) und der mindestens eine Keilnutantriebswalze (146) zu einer gemeinsamen Ebene zwischen den Walzen tangierend ist;
einen Endlosriemen (142), der um die mindestens eine Keilnutantriebswalze (146) und die Führungswalze (148) gelegt ist, wobei der Gurt (142) eine innere Querkeilnutoberfläche aufweist, die Keilnuten aufweist, die komplementär zu Keilnuten auf der Keilnutantriebswalze (146) geformt sind; und
ein Vorspannelement (144), das eine Vielzahl von Folgewalzen (180) trägt, die jeweils vertikal über einer entweder der mindestens einen Keilnutantriebswalze (146) oder einer der Führungswalzen (148) ausgerichtet sind, wobei das Vorspannelement (144) betätigbar ist, um jede Folgewalze (180) zu einer entweder der mindestens einen Keilnutantriebswalze (146) oder einer der Führungswalzen (148) zu pressen, um reibungsbedingt einen biegsamen Lanzenschlauch zu erfassen, wenn er zwischen den Folgewalzen (180) und dem Endlosgurt (142) eingeschlossen ist.

2. Gerät (100) nach Anspruch 1, wobei das Vorspannelement (144) eine Vielzahl von Druckluftzylindern (172) umfasst, die in dem Gehäuse (102) befestigt sind, wobei jeder einen Kolben (174) aufweist, der mit einem Folgewalzentragblock (176) verbunden ist, der die Vielzahl von Folgewalzen (180) über dem Endlosgurt (142) trägt.

3. Gerät nach Anspruch 1, wobei das Vorspannelement (144) einen stationären Abschnitt und einen bewegbaren Abschnitt aufweist, wobei der bewegbare Abschnitt die Vielzahl von Folgewalzen (180) jeweils vertikal über einer der Führungs- oder der Keilnutwalzen (148, 146) trägt.

4. Gerät (100) nach Anspruch 3, wobei jede Folgewalze (180) ein Ende drehbar an einer ersten flachen Platte (178) befestigt aufweist, und ein zweites Ende drehbar an einer zweiten flachen Platte drehbar befestigt aufweist, und wobei die erste und die zweite flache Platte (178) an einem Folgewalzen-Tragblock (176) befestigt sind.

5. Gerät nach Anspruch 4, wobei der bewegbare Abschnitt des Vorspannelements (144) mindestens einen Kolben (174) in einem Druckluftzylinder (172), der an dem Gehäuse (102) befestigt ist, beinhaltet.

6. Gerät nach Anspruch 5, wobei die erste und die zweite flache Platte (178) über dem Endlosgurt (142) parallel und beabstandet sind.

7. Gerät nach Anspruch 1, das weiter eine zylindrische Spannwalze (158) umfasst, die in dem zweiten Abschnitt des Gehäuses (102) zum Aufrechterhalten einer Spannung auf dem Endlosgurt (142) montiert ist.

8. Gerät nach Anspruch 7, wobei die Spannwalze (158) auf einer Exzenterachse (160) montiert ist.

9. Gerät nach Anspruch 1, wobei das Gehäuse (102) eine vertikale Innenwand aufweist, die sich zwischen einer Vorderseiten- und einer Rückseitenwand und zwischen einer Oberseiten- und Unterseitenwand erstreckt, die den ersten und den zweiten Abschnitt definiert, und eine äußere untere vertikale Wand (130), die sich zwischen der Vorderseitenwand und der Rückseitenwand (108, 110) erstreckt.

10. Gerät nach Anspruch 9, wobei der mindestens eine Antriebsmotor (122) auf der vertikalen Innenwand (120) montiert ist, und die Führungswalzen (148) an der äußeren unteren vertikalen Wand (120) befestigt sind.

11. Antriebsgerät (100) für biegsame Lanze nach Anspruch 1, das weiter einen zweiten Antriebsmotor (124) umfasst, der Seite an Seite mit dem mindestens einen Antriebsmotor (122) beabstandet und in dem ersten Abschnitt des Gehäuses (102) angeordnet ist und eine andere zylindrische Keilnutantriebswalze (146) in dem zweiten Abschnitt des Gehäuses (102) trägt.

12. Gerät (100) nach Anspruch 11, wobei das Vorspannelement (144) eine Vielzahl pneumatischer Zylinder (172) beinhaltet, die in dem Gehäuse (102) befestigt sind, die jeder einen Kolben (174) aufweisen, der mit einem Folgewalzen-Tragblock (176), der die Vielzahl von Folgewalzen (180) über dem Endlosgurt (142) trägt, verbunden ist.

13. Gerät (100) nach Anspruch 11, wobei das Vorspannelement (144) einen stationären Abschnitt (172) und einen bewegbaren Abschnitt (174) aufweist, wobei der bewegbare Abschnitt die Vielzahl von Folgewalzen (180) jede vertikal über einer der Führungswalze oder der Keilwalze (148, 146) trägt.

14. Gerät (100) nach Anspruch 13, wobei jede Folgewalze (180) ein Ende drehbar an einer ersten flachen Platte (178) befestigt hat, und ein zweites Ende, das drehbar an einer zweiten flachen Platte (178) befestigt ist, und wobei die erste und die zweite Platte (178) an dem Folgewalzen-Tragblock (176) befestigt sind.

15. Gerät (100) nach Anspruch 11, wobei jede Folgewalze (180) beabstandete konkave gekrümmte Nuten (182) aufweist.

## Revendications

1. Dispositif (100) d'entraînement de lance de nettoyage flexible à fluide haute pression comprenant :
un boîtier (102) ;
au moins un moteur d'entraînement (122) disposé dans une première portion du boîtier (102), le moteur d'entraînement (122) ayant un axe d'entraînement (126) faisant saillie à travers une deuxième portion du boîtier portant un rouleau d'entraînement à cannelures cylindrique (146) ;
une pluralité de rouleaux de guidage cylindriques (148) sur des axes fixes s'étendant à travers la deuxième portion du boîtier (102) alignés parallèlement au rouleau d'entraînement à cannelures (146), et dans lequel une surface latérale de chaque rouleau de guidage (148) et de l'au moins un rouleau d'entraînement à cannelures (146) est tangente à un plan commun entre les rouleaux ;
une courroie sans fin (142) enveloppée autour de l'au moins un rouleau d'entraînement à cannelures (146) et des rouleaux de guidage (148), la courroie (142) ayant une surface intérieure cannelée transversale ayant des cannelures de forme complémentaire aux cannelures sur le rouleau d'entraînement à cannelures (146) ; et
un élément de sollicitation (144) supportant une pluralité de rouleaux suiveurs (180), chacun étant aligné verticalement au-dessus d'un de soit l'au moins un rouleau d'entraînement à cannelures (146) soit un des rouleaux de guidage (148), dans lequel l'élément de sollicitation (144) est actionnable pour presser chaque rouleau suiveur (180) vers un de soit l'au moins un rouleau d'entraînement à cannelures (146) soit un des rouleaux de guidage (148) pour saisir par friction un tuyau de lance flexible lorsque pris en sandwich entre les rouleaux suiveurs (180) et la courroie sans fin (142).

2. Dispositif (100) selon la revendication 1 dans lequel l'élément de sollicitation (144) inclut une pluralité de cylindres pneumatiques (172) fixés dans le boîtier (102) ayant chacun un piston (174) relié à un bloc de support de rouleau suiveur (176) supportant la pluralité de rouleaux suiveurs (180) au-dessus de la courroie sans fin (142).

3. Dispositif selon la revendication 1 dans lequel l'élément de sollicitation (144) a une portion fixe et une portion mobile, la portion mobile supportant la pluralité de rouleaux suiveurs (180) chacun verticalement au-dessus d'un des rouleaux de guidage ou à cannelures (148, 146).

4. Dispositif (100) selon la revendication 3 dans lequel chaque rouleau suiveur (180) a une extrémité fixée en rotation à une première plaque plate (178) et une deuxième extrémité fixée en rotation à une deuxième plaque plate et dans lequel les première et deuxième plaques plates (178) sont fixées à un bloc de support de rouleau suiveur (176).

5. Dispositif selon la revendication 4 dans lequel la portion mobile de l'élément de sollicitation (144) inclut au moins un piston (174) dans un cylindre pneumatique (172) fixé au boîtier (102).

6. Dispositif selon la revendication 5 dans lequel les première et deuxième plaques plates (178) sont parallèles et espacées au-dessus de la courroie sans fin (142).

7. Dispositif selon la revendication 1 comprenant en outre un rouleau de tension cylindrique (158) monté dans la deuxième portion du boîtier (102) pour maintenir une tension sur la courroie sans fin (142).

8. Dispositif selon la revendication 7 dans lequel le rouleau de tension (158) est monté sur un axe excentrique (160).

9. Dispositif selon la revendication 1 dans lequel le boîtier (102) a une paroi intérieure verticale s'étendant entre des parois avant et arrière et entre des parois supérieure et inférieure définissant les première et deuxième portions et une paroi verticale inférieure extérieure (130) s'étendant entre les parois avant et arrière (108, 110).

10. Dispositif selon la revendication 9 dans lequel l'au moins un moteur d'entraînement (122) est monté sur la paroi intérieure verticale (120) et les rouleaux de guidage (148) sont fixés à la paroi verticale inférieure extérieure (120).

11. Dispositif (100) d'entraînement de lance flexible selon la revendication 1 comprenant en outre un deuxième moteur d'entraînement (124) disposé côte à côte avec l'au moins un moteur d'entraînement (122) et espacé dans la première portion du boîtier (102) et portant un autre rouleau d'entraînement à cannelures cylindrique (146) dans la deuxième portion du boîtier (102).

12. Dispositif (100) selon la revendication 11 dans lequel l'élément de sollicitation (144) inclut une pluralité de cylindres pneumatiques (172) fixés dans le boîtier (102) chacun ayant un piston (174) relié à un bloc de support de rouleau suiveur (176) supportant la pluralité de rouleaux suiveurs (180) au-dessus de la courroie sans fin (142).

13. Dispositif (100) selon la revendication 11 dans l'élément de sollicitation (144) a une portion fixe (172) et une portion mobile (174), la portion mobile supportant la pluralité de rouleaux suiveurs (180) chacun verticalement au-dessus des rouleaux de guidage ou à cannelures (148, 146).

14. Dispositif (100) selon la revendication 13 dans lequel chaque rouleau suiveur (180) a une extrémité fixée en rotation à une première plaque plate (178) et une deuxième extrémité fixée en rotation à une deuxième plaque plate (178) et dans lequel les première et deuxième plaques plates (178) sont fixées à un bloc de support de rouleau suiveur (176).

15. Dispositif (100) selon la revendication 11 dans lequel chaque rouleau suiveur (180) a des rainures incurvées concaves espacées (182).
